Europäisches Patentamt

European Patent Office

Office européen des brevets

(11) Publication number: **0 211 252
B1**

(12) **EUROPEAN PATENT SPECIFICATION**

(45) Date of publication of patent specification: **11.04.90**

(51) Int. Cl.⁵: **C 04 B 28/18, C 04 B 16/06**

(21) Application number: **86109283.1**

(22) Date of filing: **08.07.86**

(54) **Cured fiber-reinforced articles.**

(30) Priority: **08.07.85 JP 149636/85
22.01.86 JP 10256/86**

(43) Date of publication of application:
**25.02.87 Bulletin 87/09**

(45) Publication of the grant of the patent:
**11.04.90 Bulletin 90/15**

(84) Designated Contracting States:
**CH DE GB LI**

(56) References cited:
**EP-A-0 027 489
GB-A-2 065 735**

**RESEARCH DISCLOSURE, no. 234, October
1983, page 313, disclosure no. 23439, Havant,
Hampshire, GB; "Cementitious product
reinforcement with arcylic fibers"**

**CHEMICAL ABSTRACTS, vol. 95, no. 4, 27th July
1981, page 255, abstract no. 29228c, Columbus,
Ohio, US**

**The file contains technical information
submitted after the application was filed and
not included in this specification**

(73) Proprietor: **MITSUBISHI RAYON COMPANY,
LTD.
3-19 Kyobashi-2-chome, Chuo-ku
Tokyo 104 (JP)**

(72) Inventor: **Nagai, Shoichi c/o Mitsubishi Rayon
Co., Ltd.
1-60, Sunadabashi-4-chome Higashi-ku
Nagoya (JP)**
Inventor: **Hiraoka, Saburo c/o Mitsubishi Rayon
Co., Ltd.
1-60, Sunadabashi-4-chome Higashi-ku
Nagoya (JP)**
Inventor: **Hama, Shinji c/o Mitsubishi Rayon
Co., Ltd.
1-60, Sunadabashi-4-chome Higashi-ku
Nagoya (JP)**
Inventor: **Senga, Mitsuo c/o Mitsubishi Rayon
Co., Ltd.
1-60, Sunadabashi-4-chome Higashi-ku
Nagoya (JP)**

(74) Representative: **Lehn, Werner, Dipl.-Ing. et al
Hoffmann, Eitle & Partner Patentanwälte
Arabellastrasse 4
D-8000 München 81 (DE)**

Courier Press, Leamington Spa, England.

**Description**

Industrial Application Fields

The present invention relates to steam-cured lightweight calcium silicate articles superior in homogeneity and mechanical strength.

Prior Art

Lightweight calcium silicate articles have hitherto been produced by steam-curing processes, which generally comprise: mixing and grinding a siliceous material such as silica sand, diatomaceous earth, or other mineral silica and a calcareous material such as lime or gypsum; admixing asbestos fibers; further admixing water in a suitable proportion to form a slurry; removing water by filtration to give semi-plastic matter; and subjecting the semi-plastic matter to high-temperature steam curing in an autoclave.

In these processes, raw material asbestos fibers have long been used in large quantities because of their eminent properties such as affinity for the other inorganic raw materials, filterability for water removal, heat resistance, and alkali resistance and because of their low price. However, it has been revealed in recent years that asbestos fibers are carcinogenic, and from the standpoint of industrial hygiene and environmental preservation, European and American countries are going to prohibit the use of asbestos fibers by law. Thus it is desired intensely to develop cured lightweight calcium silicate articles containing other fibers instead of asbestos fibers.

Many kinds of fibers were already proposed for use as substitutes for asbestos fibers in the above field of industry. The proposed fibers include synthetic fibers, e.g. polypropylene, polyamide, polyester, poly(vinyl alcohol) fibers, organic regenerated fibrous materials, e.g. cellulosic fibers and cellulose pulp, and inorganic fibers, e.g. glass, carbon, and steel fibers.

The use of acrylics among the above fibers is disclosed in U.S. Patent Nos. 3,773,700; 3,903,873; 4,414,031; and 4,515,613, Japanese Patent Publication No. 18213/78, Japanese Patent Application Laid-Open Nos. 100163/81, 161117/82, 120811/83, 128261/84, 60959/85, 81309/85, 112656/85, 112657/85, 112658/85, and 112659/85, and French Patent No. 2,480,740.

The fibers to be used as substitutes for asbestos fibers in the production of high-temperature cured lightweight calcium silicate articles need to be superior particularly in such characteristics as water removability from the raw material slurry containing them, heat resistance, and alkali resistance in addition to affinity for the inorganic raw materials. Cellulose pulp is a relatively cheap fibrous material substitute for asbestos fibers but is inferior in dispersibility in the raw material slurry and in water removability from the slurry containing it, and is insufficient in reinforcing effect on cured lightweight calcium silicate articles.

The present inventors made intensive studies aiming at solving the above noted problems of fibers for use as substitutes for asbestos fibers in steam-cured lightweight calcium silicate articles and at developing such articles superior in productivity, homogeneity, and mechanical strength. As a result the present invention has been accomplished.

Problems to Solve According to the Invention

An object of the present invention is to provide steam-cured lightweight calcium silicate articles superior in homogeneity and mechanical strength which contain specific acrylic fibers.

The present invention involves an article produced by steam-curing a moisture-containing composition composed mainly of (i) inorganic feedstock consisting of a siliceous and a calcareous material and (ii) acrylic fibers having an accessibility (explained later) of at least 15 obtainable by removing said fibers from the fiber production process prior to heat treatment thereof.

Suitable acrylic fibers for use in the steam-cured lightweight calcium silicate articles of the present invention contain at least 30% by weight of acrylonitrile and have accessibilities of at least 15, preferably at least 20, sizes of 0.1 to 5.0 d (diameters of $3.44 \times 10^{-3}$ to $2.43 \times 10^{-2}$ mm), and filament lengths of 1 to 10 mm, preferably 1.5 to 5 mm.

If the used acrylic fibers contain less acrylonitrile than 30% by weight or have lower accessibilities than 15, the steam curing of products which are prepared by molding the dehydration product of a slurry containing the fibers along with the inorganic feed-stock will give such small amounts of the hydrolysis product of cyano groups in the fibers or such low rates of the hydrolysis that the fibers will have little reinforcing effect on the cured lightweight calcium silicate articles. The fiber length is desired to be in the range of 1 to 10 mm. If the length of the used acrylic fibers is less than 1 mm, the filterability of slurried feed-stock for water removal will be deteriorated and the productivity will be lowered. On the other hand, if the fiber length exceeds 10 mm, the entanglement of fibers resulting from stirring in the slurry formation will develop flocculent agglomerates so that uniform mixing of the fibers with the inorganic feed-stock will be difficult and the resulting lightweight calcium silicate articles will have uneven quality. Preferably the fiber length is in the range of 1.5 to 5 mm.

Acrylic fibers having an accessibility of at least 15 for use in the present invention can be obtained by taking up fibers prior to heat-treatment thereof in the usual wet or dry spinning process for producing acrylic fibers from acrylonitrile-based polymers containing at least 30% by weight of acrylonitrile.

For example, acrylic fibers Vonnel 17 (1.5 d × 51 mm (diameter $1.33 \times 10^{-2}$ mm × length 51 mm), supplied by Mitsubishi Rayon Co., Ltd.) have an accessibility of 5, which are produced by a wet spinning process from a copolymer constituted of 93% by weight of acrylonitrile and 7% by weight of vinyl acetate, while fibers extracted after stretching and those extracted after drying, in said fiber production process, exhibit accessibilities of 80 and 21, respectively. Accordingly, acrylic fibers having an accessibility of at least 15 can be obtained by removing said fibers from the fiber production process prior to heat treatment thereof.

Such acrylic fibers for use in the present invention can be produced at a lower cost in the form of tow since they permit omitting the heat treatment operation. In addition, undried acrylic fibers are easy to cut to a definite length because they don't cause themselves to melt in the cutting process. Thus a reasonable production of short acrylic fibers has become possible. Moreover, because of being in the wet state, the undried short acrylic fibers are remarkably improved in uniform miscibility in the feedstock slurry as compared with the hitherto used acrylic fibers. This is accompanied by marked improvements of the present acrylic fibers over those used hitherto, in removability of water from the fiber-containing slurry and dispersibility in the cured lightweight calcium silicate articles, and by increased mechanical strengths, e.g. flexural strength, of the articles.

In order to produce the cured light weight calcium silicate articles of the present invention, the above stated acrylic fibers need to be used in a proportion of 1 to 5% by weight to the inorganic feedstock. A slurry formed by mixing such acrylic fibers with the inorganic feedstock in water is filtered to remove water, forming semi-plastic matter, which is then transferred into an autoclave and cured with high-temperature steam. In this case, cyano groups of the short acrylic fibers having an accessibility of at least 15 are rapidly hydrolyzed into many carboxyl groups via acid amido groups. It is assumed that these carboxyl groups will readily combine with calcium atoms in the calcium silicate, increasing the flexural and impact strengths of the cured lightweight calcium silicate articles. When cotton pulp or rayon, which is a cellulosic material, is used jointly with the acrylic fibers, the water removability from the slurry will be more improved and the strength of the cured calcium silicate articles will be further increased. The two fibrous materials are used in a total amount of 2 to 16% by weight (based on the inorganic feedstock) and 1/2 to 1/5, preferably 1/3 to 1/4, of the total amount is occupied by the short acrylic fibers.

The siliceous material used as main feed for the cured lightweight calcium silicate articles is, for example, mineral silica, diatomaceous earth, silica sand, blast furnace slag, or fly ash. There is no particular restriction on the calcareous material used as another main feed so far as it is a generally used material such as lime or gypsum. The mixture of the feed materials may be stirred by any of common agitators such as paddle, propeller, and pot types of agitators.

The high-temperature curing in an autoclave can be performed under generally applied conditions, for instance, using saturated steam at 180°C. The high-temperature steam-cured lightweight calcium silicate articles of the present invention have superior productivity, homogeneity, and mechanical strength, which are by no means inferior to those of the conventional ones reinforced with asbestos fibers. Thus the present articles are useful as building materials such as wall materials, floorings, and boards and civil engineering materials.

## Examples

The present invention is illustrated with reference to the following examples. In the examples, the foregoing accessibility of acrylic fibers and the flexural strength of lightweight calcium silicate boards were measured in the following ways.

## Measurement of Accessibility

Iodine adsorption treatment of test acrylic fibers is conducted by immersing 0.3 g of the fibers in 10 ml of an aqueous solution containing 0.2 mole/l of iodine and 0.3 mole/l of potassium iodide at 20°C for 120 minutes.

Then the concentration of iodine remaining in the resulting solution is determined by titration using an N/10 aqueous sodium thiosulfate solution and starch as an indicator, and the quantity (% owf) of iodine adsorbed on the fibers is calculated from the determined concentration, to represent the accessibility. The large amount of iodine adsorbed on fibers indicates the higher accessibility of the fibers.

## Measurement of Flexural Strength

A test piece 15 cm long and 4 cm wide is placed on two fulcra (10 cm span), then force is applied on the center line by a loading body of which curvature radius is 2.5 cm, and the load (F) required to break the test piece was measured by using a large size tensiron universal tester model UTM—25T (supplied by Toyo-Baldwin Co., Ltd.). The flexural strength (B) is calculated from the found load (F) according to the following equation:

$$B \ (kg/cm^2) = \frac{3}{2} \cdot \frac{FL}{bt^2}$$

wherein
F: Load (kg) at break
L: Span (10 cm) between fulcra
b: Width (4 cm) of test piece
t: Thickness (cm) of test piece

## Example 1

In a process for producing tows of acrylic fibers (registered tradename Vonnel H815, supplied by Mitsubishi Rayon Co., Ltd.) having a size of 1.5 d (a diameter of $1.33 \times 10^{-2}$ mm), undried tows which had been spun, stretched, and rinsed were cut by a cutter to give short acrylic fibers having a definite length of 3 mm and an accessibility of 80.

One part by weight (hereinafter "part(s) by weight" is abbreviated as "part(s)") of the short acrylic fibers, 4 parts of cotton pulp, and 200 parts of water were added to a mixture of powdery siliceous materials (9.4 parts of silica sand and 7.0 parts of wollastonite) and powdery calcareous materials (18.8 parts of slaked lime and 4.7 parts of gypsum). The resulting mixture was stirred in a mixer to form a uniform slurry, which was then poured into a mold in a weight-to-area proportion of 12.5 $g/cm^2$. A pressure of 2 $kg/cm^2$ was applied to the slurry in the mold through a 60-mesh wire gauze, whereby the slurry was dehydrated to give a 2.5-cm thick semi-plastic flat board.

This board was then subjected to high-temperature steam curing for 6.5 hours in saturated steam at 180°C to yield a steam-cured lightweight calcium silicate board.

For comparison, steam-cured lightweight calcium silicate boards of different compositions were made according to the above procedure by using normal short acrylic fibers (registered tradename Vonnel V17, supplied by Mitsubishi Rayon Co., Ltd., size 1.5 d (diameter $1.33 \times 10^{-2}$ mm), fiber length 3 mm, accessibility 5), glass fibers, cotton pulp, and asbestos fibers as shown in Table 1.

Table 1 shows times for dehydrating the slurries and the found flexural strengths of the cured boards.

## Table 1

| Run No. | Fibrous material used | Mixing proportion (part by wt) | Dehydration time (min) | Flexural strength kg/cm$^2$ | Note |
|---|---|---|---|---|---|
| 1 | Short acrylic fibers (accessibility 80)<br><br>Cotton pulp | 1<br><br>4 | 2.8 | 80 | Example according to present invention |
| 2 | Normal short acrylic fibers (accessibility 5)<br><br>Cotton pulp | 1<br><br>4 | 3.2 | 77 | Comparative example |
| 3 | Glass fibers<br><br>Cotton pulp | 1<br><br>4 | 4.0 | 56 | " |
| 4 | Cotton pump | 5 | 4.2 | 55 | " |
| 5 | Asbestos fibers | 10 | 2.6 | 82 | " |

As shown in Table 1, the slurry containing 1 part of short acrylic fibers and 4 parts of cotton pulp according to the present invention could be dehydrated in a shorter time than were the slurries of comparative examples containing normal short acrylic fibers and cotton pulp in the same proportions, glass fibers and cotton pulp in the same proportions, and 5 parts of cotton pulp, respectively, and showed superior water removability equivalent to that from the slurry containing 10 parts of asbestos fibers. With respect to the flexural strength of cured lightweight calcium silicate boards, the product of the invention was superior to those of comparative examples (Run Nos. 2, 3, and 4) and equivalent to that of the product reinforced with 10 parts of asbestos fibers.

These results indicate that combination of specific acrylic fibers with cotton pulp exhibits synergistic effects which are intended according to the present invention.

Example 2

In a process for producing tows of acrylic fibers (registered tradename Vonnel V17 supplied by Mitsubishi Rayon Co., Ltd.) having a size of 1.5 d (a diameter of $1,33 \times 10^{-2}$ mm), undried tows which had been spun, stretched, and rinsed were cut by a cutter to a definite fiber length of 3 mm, and dried in a hot-air oven at 105°C to give short acrylic fibers having an accessibility of 52. A slurry was prepared according to the procedure of Example 1 by intermixing 1 part of these short acrylic fibers, 4 parts of cotton pulp, 9.4 parts of silica sand, 7.0 parts of wollastonite, 18.8 parts of slaked lime, 4.7 parts of gypsum, and 200 parts of water. The slurry was then poured into a mold in a weight-to-area proportion of 12.5 g/cm$^2$, and dehydrated by applying a pressure of 2 kg/cm$^2$ to itself in the mold through a 60-mesh wire gauze to give a 2.5-cm thick semi-plastic flat board. This board was then subjected to high-temperature steam curing for 6.5 hours in saturated steam at 180°C to yield a steam-cured lightweight calcium silicate board. In this case, the slurry dehydration time was 3 minutes and the flexural strength of the product was 71 kg/cm$^2$, thus being indicated superior slurry water removability and product flexural strength.

Effect of the Invention

According to the present invention, it is possible to provide lightweight calcium silicate compositions which contain no asbestos fiber and have excellent performance characteristic as well as suitability for making high-temperature steam-cured lightweight calcium silicate articles desired hitherto intensely, by using, jointly with a cellulosic material, short acrylic fibers having an accessibility of at least 15, a size of 0.1 to 5.0 d (a diameter of $3.44 \times 10^{-3}$ to $2.43 \times 10^{-2}$ mm), and a filament length of 1 to 10 mm.

**Claims**

1. A fiber-reinforced article produced by steam-curing a moisture-containing composition composed mainly of (i) inorganic feedstock consisting of a siliceous material and a calcareous material and (ii) acrylic fibers having an accessibility of at least 15 obtainable by removing said fibers from the fiber production process prior to heat treatment thereof.

2. The cured article of Claim 1, wherein the acrylic fibers have a size if 0.1 to 5.0 d (a diameter of $3.44 \times 10^{-3}$ to $2.43 \times 10^{-2}$ mm) and a filament length of 1 to 10 mm.

3. The cured article of Claim 1, wherein the acrylic fibers have a filament length of 1.5 to 5 mm.

4. The cured article of Claim 1, wherein the acrylic fibers are contained in an amount of 1 to 5% by weight of the inorganic feedstock.

5. The cured article of Claim 1, wherein a cellulosic material is used jointly with the acrylic fibers.

6. The cured article of Claim 5, wherein the cellulosic material is cotton pulp or rayon.

7. The cured article of Claim 5, wherein the acrylic fibers and the cellulosic material are contained in a total amount of 2 to 16% by weight of the inorganic feedstock.

8. The cured article of Claim 5, wherein the cellulosic material is jointly used in a proportion of 2 to 5 parts by weight to 1 part by weight of the acrylic fibers.

**Patentansprüche**

1. Faserverstärkter Artikel, hergestellt durch Dampfhärten einer feuchtigkeitshaltigen Zusammensetzung, die sich im wesentlichen aus (i) einem anorganischen Einsatzmaterial, das aus einem kieselhaltigen Material und einem kalkhaltigen Material besteht, und (ii) Acrylfasern mit einer Zugänglichkeit von mindestens 15, die durch Entfernen der Fasern aus dem Faserherstellungsprozeß vor der Hitzebehandlung erhältlich sind, zusammensetzt.

2. Gehärteter Artikel nach Anspruch 1, wobei die Acrylfasern eine Größe von 0,1 bis 5,0 d (einen Durchmesser von $3,44 \times 10^{-3}$ bis $2,43 \times 10^{-2}$ mm) und eine Filamentlänge von 1 bis 10 mm besitzen.

3. Gehärteter Artikel nach Anspruch 1, wobei die Acrylfasern eine Filamentlänge von 1,5 bis 5 mm besitzen.

4. Gehärteter Artikel nach Anspruch 1, wobei die Acrylfasern in einer Menge von 1 bis 5 Gewichtsprozent in Bezug auf das anorganische Einsatzmaterial enthalten sind.

5. Gehärteter Artikel nach Anspruch 1, wobei ein Zellulosematerial zusammen mit den Acrylfasern verwendet wird.

6. Gehärteter Artikel nach Anspruch 5, wobei das Zellulosematerial Baumwollpulpe oder Kunstseide ist.

7. Gehärteter Artikel nach Anspruch 5, wobei die Acrylfasern und das Zellulosematerial in einer Gesamtmenge von 2 bis 16 Gewichtsprozent in Bezug auf das anorganische Einsatzmaterial enthalten sind.

8. Gehärteter Artikel nach Anspruch 5, wobei das Zellulosematerial in einem Anteil von 2 bis 5 Gewichtsteilen gemeinsam mit 1 Gewichtsteil an Acrylfasern verwendet wird.

**Revendications**

1. Article renforcé par fibres produit par cuisson à la vapeur d'une composition contenant de l'humidité, constituée principalement de (i) un substrat minéral composé d'un matériau siliceux et d'un matériau calcaire et (ii) des fibres acryliques ayant une accessibilité d'au moins 15, fibres que l'on peut obtenir en retirant lesdites fibres du procédé de production de fibres avant le traitement thermique desdites fibres.

2. Article cuit selon la revendication 1, dans lequel les fibres acryliques ont une taille de 0,1 à 5,0 d (diamètre de $3,44 \times 10^{-3}$ à $2,43 \times 10^{-2}$ mm) et une longueur de filament de 1 à 10 mm.

3. Article cuit selon la revendication 1, dans lequel les fibres acryliques ont une longueur de filament de 1,5 à 5 mm.

4. Article cuit selon la revendication 1, dans lequel les fibres acryliques figurent en une quantité de 1 à 5% en poids par rapport au substrat minéral.

5. Article cuit selon la revendication 1, dans lequel un matériau cellulosique est utilisé conjointement avec les fibres acryliques.

6. Article cuit selon la revendication 5, dans lequel le matériau cellulosique est de la pulpe de coton ou de la rayonne.

7. Article cuit selon la revendication 5, dans lequel les fibres acryliques et le matériau cellulosique figurent en une quantité totale de 2 à 16% en poids par rapport au substrat minéral.

8. Article cuit selon la revendication 5, dans lequel le matériau cellulosique est utilisé conjointement en une proportion de 2 à 5 parties en poids pour 1 partie en poids de fibres acryliques.